Europäisches Patentamt

European Patent Office

Office européen des brevets

(19)

(11) Publication number: **0 092 247**
**A2**

# (12) EUROPEAN PATENT APPLICATION

(21) Application number: 83103856.7

(22) Date of filing: 20.04.83

(51) Int. Cl.³: **B 25 J 11/00**, B 25 J 9/00

(30) Priority: 20.04.82 JP 64711/82

(43) Date of publication of application: 26.10.83
Bulletin 83/43

(84) Designated Contracting States: DE FR GB

(71) Applicant: HITACHI, LTD., 6, Kanda Surugadai 4-chome
Chiyoda-ku, Tokyo (JP)

(72) Inventor: Uchida, Akira, Mimomi Apt. A-202 1-1070-5,
Mimomi-cho, Narashino-shi Chiba-ken (JP)
Inventor: Ida, Daijiro, 3-11-3-1210, Tsudanuma,
Narashino-shi Chiba-ken (JP)
Inventor: Tsunoo, Mitsunobu, Mimomi Apt.
A-301 1-1070-5, Mimomi-cho, Narashino-shi Chiba-ken
(JP)

(74) Representative: Patentanwälte Beetz sen. - Beetz jun.
Timpe - Siegfried - Schmitt-Fumian,
Steinsdorfstrasse 10, D-8000 München 22 (DE)

(54) Articulation of industrial robot.

(57) A combined ball-and-roller bearing portion is employed
as one of two bearing portions which hold the rocking shaft of
an arm portion in a multi-articulated robot on both its sides,
and a preliminary pressure is afforded between two bearings
which form the combined ball-and-roller bearing portion. Thus,
even when the preliminary pressure is exerted on the bearing
portion, any distortion influential on the precision of the robot
is prevented from developing, so that both the supporting ri-
gidity and precision of the arm portion are rendered satisfac-
torily high.

ARTICULATION OF INDUSTRIAL ROBOT

Field of the Invention

The present invention relates to an articulation which is suited to a quadric parallel link type multi-articulated industrial robot, etc.

Background of the Invention

Industrial robots of various operating aspects have been used. Among them, multi-articulated robots of the quadric parallel link type have come into wide use as industrial robots because the posture change of themselves due to a motion in the lengthwise direction of a forearm is small, and besides, the posture change of themselves due to the positional change of a wrist is readily controlled to be small.

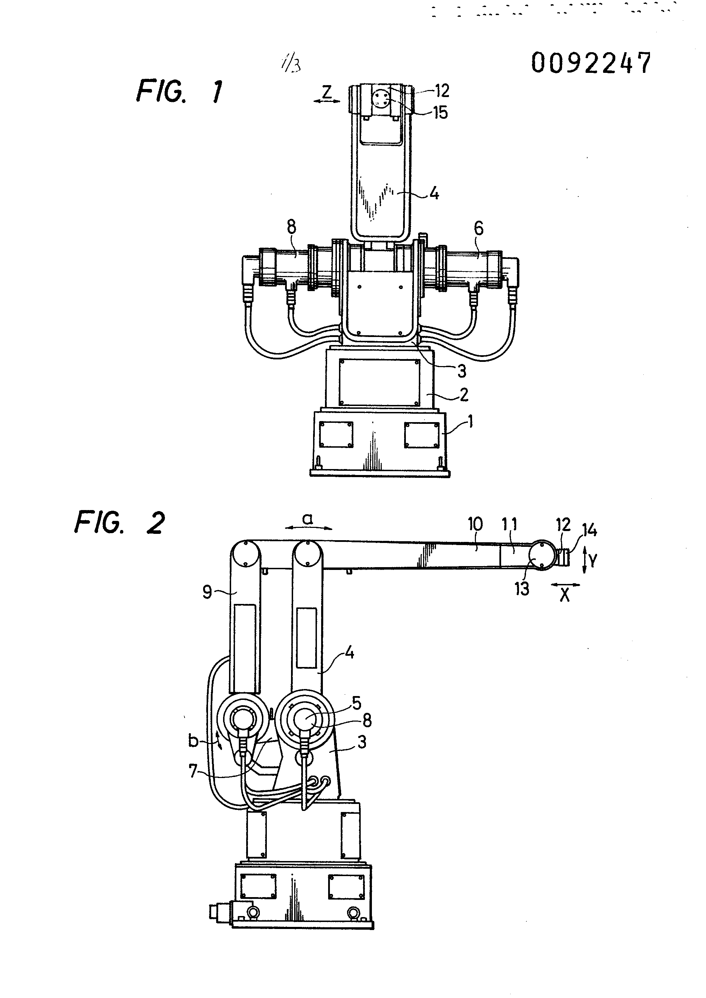

An example of such quadric parallel link type multi-articulated robot (hereinbelow, simply termed "robot") will be explained with reference to a front view of Figure 1 and a side view of Figure 2.

In Figures 1 and 2, numeral 1 designates a stationary base, numeral 2 a turntable which is rotatable on the stationary base, numeral 3 a base which is fixed to the turntable, numeral 4 a first arm which is rockable about a point 5 on the base 3, numeral 6 a first motor which serves to drive the first arm 4, numeral 7 a second arm which is rockable about the point 5, numeral 8 a

- 2 -

0092247

second motor which serves to drive the second arm 7, numerals 9 and 10 third and fourth arms which constitute parallel links along with the first arm 4 and second arm 7, numeral 11 a fore end portion which is fixed to the fourth arm 10, numeral 12 a rotary member which is rockable about a point 13 on the fore end portion 11, and numeral 14 a wrist twisting shaft which is disposed in a through hole provided in the rotary member 12 and which is rotatable about the center 15 of the through hole.

In this robot, accordingly, when the first motor 6 is operated, the upper end part of the first arm 4 moves in the direction of arrow a, so that the fore end portion 11 of the fourth arm 10 can be positioned in the direction of arrow X. When the second motor 8 is operated, the second arm 7 moves in the direction of arrow b, so that the fore end portion 11 can be positioned in the direction of arrow Y. Further, when a turning motor (not shown) disposed in the stationary base 1 is operated to turn the turntable 2, the fore end portion 11 can be positioned in the direction of arrow Z.

As apparent from its designation "multi-articulated robot", this robot includes a plurality of articulate portions. The articulate portions are provided with bearing portions which consist of a large number of ball-and-roller bearings. When the bearing portion has play, the positioning accuracy degrades. Therefore, the ball-and-roller bearing which constitutes each bearing portion is given a preliminary pressure and has its inner clearance removed so as to enhance the supporting rigidity.

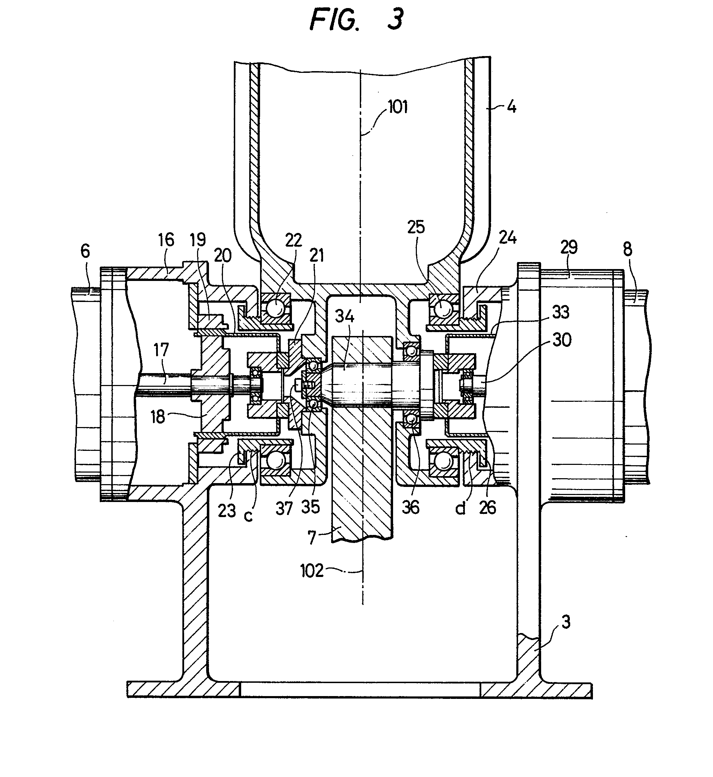

For example, the bearing portion between the first arm 4 and the second arm 7 has heretofore been constructed as shown in Figure 3.

Figure 3 is an enlarged view of a part of Figure 1, partially in section. In the figure, the base 3, first arm 4, first motor 6, second arm 7, second motor 8 etc. are the same as in Figures 1 and 2. Further, numeral 16 designates a first bracket which overhangs the first motor 6 and is fixed to the base 3. Numeral 17 designates a first motor shaft, which is the output shaft of the first motor 6. Numeral 18 indicates a first wave generator which constitutes a reduction gear, usually called "harmonic drive component", along with a first circus spline and a first flex spline to be stated below, and which is fixed to the first motor shaft 17. The first circus spline 19 is fixed to the first bracket 16 concentrically with the first motor shaft 17. Numeral 20 denotes the first flex spline, numeral 21 a first arm driving shaft, and numeral 22 a first bearing. The first arm driving

- 4 -

0092247

shaft 21 is fixed to the first arm 4, and is so installed that the first arm 4 can rock concentrically with the first motor shaft 17 owing to the first bearing 22 supported by the first bracket 16. The first flex spline 20 is fixed to the first arm driving shaft 21 in a position which is concentric with the first circus spline 19 and in which their teeth mesh with each other. An angular contact ball bearing is employed as the first bearing 22. Shown at numeral 23 is a first bearing cover which engages the first bracket 16 through a threaded portion c, and which functions to hold the first bearing 22 and to give it a preliminary pressure. Numeral 24 indicates a second bracket, which is fixed to the base 3 in a position symmetric to the first bracket 16 with respect to the rocking plane center 101 of the first arm 4 in order that its bore portion may become concentric with the rocking axis of the first arm. Numeral 25 indicates a second bearing, which is an angular contact ball bearing and which is so installed that the first arm 4 is supported to be turnable relative to the second bracket 24.

Numeral 26 represents a second bearing cover which engages the second bracket 24 through a threaded portion d, and which holds the inner race of the second bearing 25 and gives it a preliminary pressure. The second motor 8 lies coaxially with the first motor 6 and symmetrically thereto with respect to the rocking plane center of the first arm 4. Shown at numeral 29 is a third bracket, which is fixed to the second bracket 24 and overhangs the second motor 8. Numeral 30 denotes a second motor shaft, which is the output shaft of the second motor 8. A second wave generator 31 is fixed to the second motor shaft 30. A second circus spline 32 is fixed to the third bracket 29 concentrically with the second motor shaft 30. A second flex spline 33 lies concentrically with the second motor shaft 30; and constitutes a reduction gear along with the second wave generator 31 and the second circus spline 32. These components 31 and 32 do not appear in Figure 3. Numeral 34 denotes a second arm driving shaft, numeral 35 a third bearing, and numeral 36 a fourth bearing. The second arm driving shaft 34 has both its ends supported by the first arm 4 through the third bearing 35 as well as the fourth bearing 36, and the second arm 7 fixed to the second arm driving shaft 34 at the intermediate position thereof can rock concentrically with the second motor shaft 30. The second flex spline 33 is fixed to the second arm driving shaft 34. Angular contact bearings are used as the third bearing 35 and the fourth bearing 36. Shown at numeral 37 is a bearing clamping bolt, which exerts a preliminary pressure through the inner race of the third bearing 35.

- 6 -

0092247

Accordingly, when the first motor 6 is driven, the first arm 4 rocks about the axis of the first motor shaft 17, and when the second motor 8 is driven, the second arm 7 rocks about the same axis as the rocking axis of the first arm 4. Thus, the motion of the robot can be performed.

In such robot, a high supporting rigidity is required for the arm portion as stated before. At the same time, in determining the coordinate axes of the robot proper, the arm portion affords reference coordinates, so that the mounting precision thereof needs to be held sufficiently high.

In the robot as described above, the preliminary pressure for enhancing the supporting rigidity of the arm portion is applied for the first arm 4 by screwing the first bearing cover 23 and second bearing cover 26 into the first bracket 16 and second bracket 24 respectively, and for the second arm 7 by screwing the bolt 37 into the second arm driving shaft 34.

In the above example, consequently, reactions to the preliminary pressures for the first bearing 22 and the second bearing 25 act as forces expanding the base 3 laterally from inside and cause distortions expanding the upper opening of the base. Therefore, the rocking plane center 101 of the first arm 4 is inclined due to the inequality between the rigidities of the right and left parts of the base 3. Also, reactions to the preliminary pressures for the third bearing 35 and the fourth bearing 36 act as forces expanding the first arm 4 laterally from inside and cause distortions expanding the lower opening thereof. At this time, the rocking plane center 102 of the second arm 7 is similarly inclined due to the inequality between the rigidities of the right and left parts. Further, in a case where the harmonic drive component is used as the reduction gear from the motor to each arm as in the foregoing example, the degrees of the assembling precisions of the flex spline and circus spline among its constituents are greatly influential on the operating characteristics of the robot including vibrations. In this regard, when the distortions as stated above have developed, the assembling precisions of the flex spline and circus spline worsen to lower the operating characteristics of the robot in either case.

Accordingly, the robot as stated above has had the disadvantage that a sufficient preliminary pressure cannot be applied to the bearing of the articulate portion, with the result that the supporting rigidity of the arm portion cannot be rendered sufficiently high. Furthermore, in order to keep the mounting precision of the arm portion, the preliminary pressure must be applied to the bearing

- 8 -

0092247

while the distortion values of the base 3 and first arm 4 are being measured in the assemblage, which has led to the disadvantages that the control of the assembling process is complicated and that a large number of steps are required. The base 3, first bracket 16, second bracket 24 and third bracket 29 have been unitarily constructed by casting.

## Summary of the Invention

An object of the present invention is to eliminate the disadvantages of the art described above, and to provide a robot of high precision.

Another object of the present invention is to provide an articulation of a robot in which even when a preliminary pressure has been applied to a bearing, any distortion affecting a precision is prevented from developing, whereby both a supporting rigidity and the precision can be rendered sufficiently high.

To the accomplishment of the objects, according to the present invention, a combined ball-and-roller bearing portion is adopted as one of two bearing portions which hold the rocking shaft of an arm portion on both its sides, and a preliminary pressure is applied between two bearings which form the combined ball-and-roller bearing portion.

## Brief Description of the Drawings

Figure 1 is a front view showing an example of a quadric parallel link type multi-articulated robot;

Figure 2 is a side view of the multi-articulated robot shown in Figure 1;

Figure 3 is a partial sectional view showing an example of an articulate portion in the multi-articulated robot shown in Figures 1 and 2; and

Figure 4 is a partial sectional view showing an embodiment of an articulate portion in a robot according to the present invention.

Detailed Description of the Preferred Embodiment

Now, an embodiment of the articulate portion of a robot according to the present invention will be described with reference to the drawing.

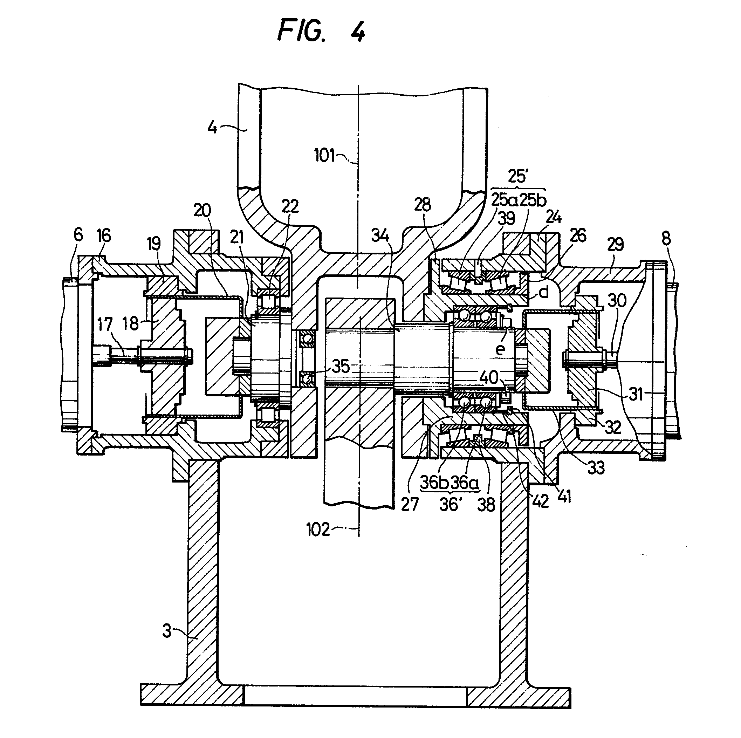

Figure 4 shows one embodiment of the present invention, and illustrates a part of Figure 1 on an enlarged scale and partially in section likewise to Figure 3. In addition, portions equivalent or identical to those in the example of Figure 3 are assigned the same symbols and will not be explained in detail.

Referring to Figure 4, symbol 25' denotes a combined ball-and-roller bearing portion, symbols 25a and 25b first and second taper roller bearings which form the combined ball-and-roller bearing 25', numeral 27 a sleeve-like shaft which serves as the rocking shaft of the first arm 4, numeral 28 a flange which is constructed unitarily with the shaft 27, symbol 36' a combined ball-and-roller bearing portion, symbols 36a and 36b first and second angular contact ball bearings which form the combined ball-and-roller bearing portion 36', numeral 38 an intermediate seat which is disposed between the outer races of the first and second taper roller bearings 25a and 25b, numeral 39 a pin which serves to position the intermediate seat 38 to the second bracket 24, numeral 40 a nut for clamping the bearings, numeral 41 a retaining ring, and numeral 42 a collar.

One of the rocking shafts of the first arm 4 is constructed of the first arm driving shaft 21, which is turnably held by the first bracket 16 owing to the first bearing 22. The other rocking shaft is constructed of the sleeve-like shaft 27, which is turnably held by the second bracket 24 through the combined bearing portion 25'. Accordingly, when the first motor 6 is driven to rotate the first motor shaft 17, the first arm 4 is rocked through the first wave generator 18, first circus spline 19 and first flex spline 20.

Herein, the inner race of the first roller bearing 25a constituting the combined ball-and-roller bearing 25' lies in contact with the flange 28, while the inner race of the second roller bearing 25b lies in contact with the bearing cover 26 screwed into the sleeve shaft 27 owing to the threaded portion d. Therefore, when the bearing cover 26 is further screwed into the sleeve shaft 27, a preliminary pressure is applied to the second roller bearing 25b, and owing to the resulting reaction, a rightward thrust as viewed in the figure develops in the sleeve shaft 27. Thus, a preliminary pressure is applied to the first roller bearing 25a through the flange 28. The axial position of the sleeve shaft 27 at this time is determined by the position relative to the second bracket 24, of the intermediate seat 38 which is interposed between the outer races of the first and second roller bearings 25a, 25b. After all, the positioning of the rocking plane center 101 of the first arm 4 is effected by the positioning of the intermediate seat 38 performed with the pin 39.

Next, the second arm driving shaft 34 serving as the rocking shaft of the second arm 7 is held, on one hand, under the first arm 4 by the ball bearing 35, and on the other hand, on the inner peripheral surface of the sleeve shaft 27 of the first arm 4 by the combined ball-and-roller bearing portion 36'. The center axis of the shaft 34 agrees with the center axis of the first bearing 22 as well as the combined ball-and-roller bearing portion 25'. Accordingly, when the second motor 8 is driven to rotate the second motor shaft 30, the second arm driving shaft 34 turns through the wave generator 31, circus spline 32 and flex spline 32, so that the second arm 7 can be rocked.

Herein, the inner race of the first bearing 36a of the combined ball-and-roller bearing portion 36' lies in contact with the flange portion of the driving shaft 34, while the inner race of the second bearing 36b lies in contact with the clamping nut 40 screwed into the driving shaft 34 owing to a threaded portion e. Therefore, when the clamping nut 40 is further·screwed, a preliminary pressure is applied to the second bearing 36b, and owing to the resulting reaction, a preliminary pressure is also applied to the first bearing 36a through the flange portion of the driving shaft 34. Besides, the outer races of the first and second bearings 36a, 36b are positioned to the inner periphery of the flange portion of the sleeve shaft 27 by the retaining ring 41 and the collar 42. After all, the positioning of the second arm driving shaft 34, in turn, the positioning of the rocking plane center 102 of the second arm 7 is effected by the inner peripheral flange portion of the sleeve shaft 27.

Thus, according to this embodiment, the first arm 4 has both its sides supported by the first bearing 22

0092247

and the combined ball-and-roller bearing portion 25'. Moreover, the reactions which are based on the preliminary pressure on the bearing portion for enhancing a supporting rigidity at this time act merely as stresses which draw the sleeve shaft 27 in its axial direction, owing to the flange 28 and the bearing cover 26, and they cause quite no stress on the other members which support the first arm 4. Therefore, even when the preliminary pressure on the bearing portion is sufficiently given thereby to enhance the supporting rigidity, quite no distortion of the members as inclines the rocking plane center 101 of the first arm 4 takes place, so that a necessary supporting rigidity can be afforded with the mounting precision of the first arm 4 kept satisfactory.

Similarly, according to this embodiment, the second arm 7 has both its ends supported by the third bearing 35 and the combined ball-and-roller bearing portion 36'. Besides, the reactions of the preliminary pressure on the bearing portion exerted by the clamping nut 40 develop within the second arm driving shaft 34 as mere stresses in the directions of drawing it axially. Therefore, even when a great preliminary pressure is exerted to enhance a supporting rigidity, no member undergoes a distortion which inclines the rocking plane center 102 of the second arm 7, so that a necessary supporting

0092247

rigidity can be afforded with the mounting precision of the second arm 7 kept satisfactorily high.

In the robot employing the harmonic drive component as such reduction mechanism, there are involved, as stated before, such disadvantages that vibrations during a robot motion increase depending upon the assembling errors of the circus spline and the flex spline of the harmonic drive unit, etc. In contrast, according to this embodiment, all the stresses based on the reactions of the preliminary pressures for the bearing portions 25' and 36' act only in the directions of extending : the sleeve shaft 27 and the driving shaft 34 in their axial directions. Accordingly, distortions causing the axes of the first and second motor shafts 17, 30, the sleeve shaft 27 and the driving shafts 21, 34 to deviate are not feared to arise. The above disadvantages can therefore be eliminated.

As a result, the embodiment renders the preliminary pressures on the bearing portions and the assembling precision of the robot independent of one another. Therefore, the control of the preliminary pressures at the assemblage of the robot is facilitated, and the number of fabricating steps can be decreased.

While, in the foregoing embodiment, the taper roller bearings 25a and 25b combined back to back are used as the combined ball-and-roller bearing portion 25'
and are given the preliminary pressure from the side
of their inner races, it is also allowed to apply a
preliminary pressure from an outer race side by employing
combined taper roller bearings confronting each other.
With this measure, substantially equal effects can be
expected.

In addition, the combined taper roller bearings
may be replaced with combined angular contact ball bearings.

On the other hand, while the cylindrical roller
bearing is used as the first bearing 22, it may be replaced
with a deep groove ball bearing, a needle roller bearing,
or the like.

Further, the positions of the first bearing 22
and the combined ball-and-roller bearing portion 25'
may be changed each other. Thus, substantially the
same effects can be achieved.

While, in the above explanation, the first bearing
22 and the combined ball-and-roller bearing portion 25'
have been referred to, such modifications are quite
similarly applicable to the third bearing 35 and the
combined ball-and-roller bearing portion 36'.

While the foregoing embodiment has been described
on the articulate portion between the first arm 4 and
second arm 7 of the robot, it is needless to say that the present invention is not restricted thereto but is also applicable to the other articulate portions.

As set forth above, according to the present invention, owing to the simple construction that a combined ball-and-roller bearing portion is used as one bearing portion of an articulate portion supported on both its sides, a preliminary pressure on the bearing portion can be given independently of the mounting precision of an arm portion.  It is therefore possible to obviate disadvantages having hitherto been involved, and to provide a robot articulation which can offer at low cost a high-performance robot with the supporting rigidity and mounting precision of the arm portion kept sufficiently high.

- 1 -

0092247

## Claim

In an articulate portion of a robot having first and second ball-and-roller bearing portions which are turnably supported in both side parts with stress generating parts held therebetween; an articulation of a robot characterized in that one of said first and second ball-and-roller bearing portions (25a, 25b; 36b, 36a) is a combined bearing section which is so constructed that stresses based on reactions to a preliminary pressure load for the ball-and-roller bearing portion develop only between two ball-and-roller bearings forming said combined bearing section.

FIG. 1

FIG. 2

1/3

0092247

## FIG. 3

FIG. 4

0092247

3/3